# EUROPEAN PATENT SPECIFICATION

(11) **EP 4 190 427 B1**
(45) Date of publication and mention of the grant of the patent: **13.11.2024**
(21) Application number: 22211368.0
(22) Date of filing: 05.12.2022
(51) Int. Cl.: B01D 46/00, B01D 46/12, B01D 46/64, B60H 3/06

(54) **FILTERING DEVICE**
FILTERVORRICHTUNG
DISPOSITIF DE FILTRE

(30) Priority: 06.12.2021 IT 202100030770
(43) Date of publication of application: 07.06.2023
(73) Proprietor: Officine Metallurgiche G. Cornaglia S.p.A., 10092 Beinasco (TO) (IT)
(72) Inventor: CORNAGLIA, Umberto, I-10092 Beinasco (TO) (IT); TAVELLA, Andrea, I-10092 Beinasco (TO) (IT); GOTELLI, Mauro, I-10092 Beinasco (TO) (IT); IVANI, Marco, I-10092 Beinasco (TO) (IT)
(74) Representative: Buzzi, Notaro & Antonielli d'Oulx S.p.A.

(56) References cited:
- EP-A1- 3 520 878
- DE-A1- 102014 004 220
- DE-A1- 102015 016 446
- DE-A1- 102019 104 476
- US-A1- 2021 275 955

## Description

The present invention relates to a filtering device for filtering air.

In particular, the filtering device described herein is configured for applications for the cab of an agricultural machine operating with a system for spraying pesticides.

In this context, a filtering device is known comprising a plurality of filter modules for eliminating or reducing the amount of dust, aerosol, and vapour present in a flow of air that traverses the device.

Such modules are assembled together to form an enbloc assembly that is supplied as single cartridge to be installed in the air-intake system of the agricultural machine. DE 102019104476 A1 discloses a filter wherein a main HEPA-filter is permanently fixed within the housing whereas a pre-filter is arranged in a replaceable manner in an inlet grid.

The object of the present invention is to provide a filtering device that is improved as compared to the solutions according to the prior art, in particular from the standpoint of its structure and its mode of use.

The present applicant has noted that in the framework of the service life of the filtering device the filter module for eliminating or reducing the amount of dust present maintenance requirements that are different from those of other filter modules for eliminating or reducing the amount of aerosol and vapour.

On the other hand, the present applicant has noted the need to guarantee protection of the filter modules for aerosols and vapours from possible alterations by whoever uses the device and could perform maintenance operations on the device itself.

In view of the foregoing, the filtering device described herein is characterized in that it comprises:
- an outer housing defining an inner chamber and a fluid passage through the inner chamber;
- a first filter module for carrying out an action of filtering on a flow of air that traverses the fluid passage to eliminate or reduce the amount of dust present in the air flow;
- a second filter module for carrying out an action of filtering on a flow of air that traverses the fluid passage to eliminate or reduce the amount of aerosol present in the air flow; and
- a third filter module for carrying out an action of filtering on a flow of air that traverses the fluid passage to eliminate or reduce the amount of vapour present in the air flow;

wherein the second and third filter modules are arranged within the inner chamber and are permanently fixed to the outer housing so that they cannot be removed from the outer housing; and
wherein the first filter module is arranged within the inner chamber and is coupled to the outer housing in a removable way.

The filtering device described herein hence envisages the possibility of separating the first filter module from the other modules, for carrying out maintenance operations or else for replacement thereof with a new first filter module. On the other hand, the second and third filter modules constitute a single block together with the outer housing, and their configuration within the filtering device can hence not be altered.

Moreover, in certain applications the filtering device described herein may envisage only the first filter module or else only the second and third filter modules, in either case maintaining the same outer housing referred to above.

Consequently, the structure of the filtering device described herein presents characteristics of modularity that make it possible to produce devices of different types with one and the same basic structure.

The claims form an integral part of the technical teaching provided herein.

Further characteristics and advantages of the present invention will emerge clearly from the ensuing description with reference to the annexed drawings, which are provided purely by way of non-limiting example and in which:
- Figure 1 illustrates an example of the filtering device described herein, according to a front view;
- Figure 2 is a cross-sectional view of the device of Figure 1 according to the plane II-II of Figure 1;
- Figure 3 is an exploded axonometric view of the device of Figure 1; and
- Figure 4 illustrates a further example not according to the invention, according to an exploded axonometric view.

In the ensuing description various specific details are illustrated aimed at enabling an in-depth understanding of the embodiments. The embodiments may be obtained without one or more of the specific details, or with other methods, components, or materials etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the device described herein has the function of filtering air and is in particular configured for applications for the cab of an agricultural machine operating with a system for spraying pesticides.

As is known, this type of substances may be harmful for humans, and for the aforesaid applications the filtering device must hence guarantee a specific protection from such substances, in addition to the normally envisaged protection from dust and particulate matter.

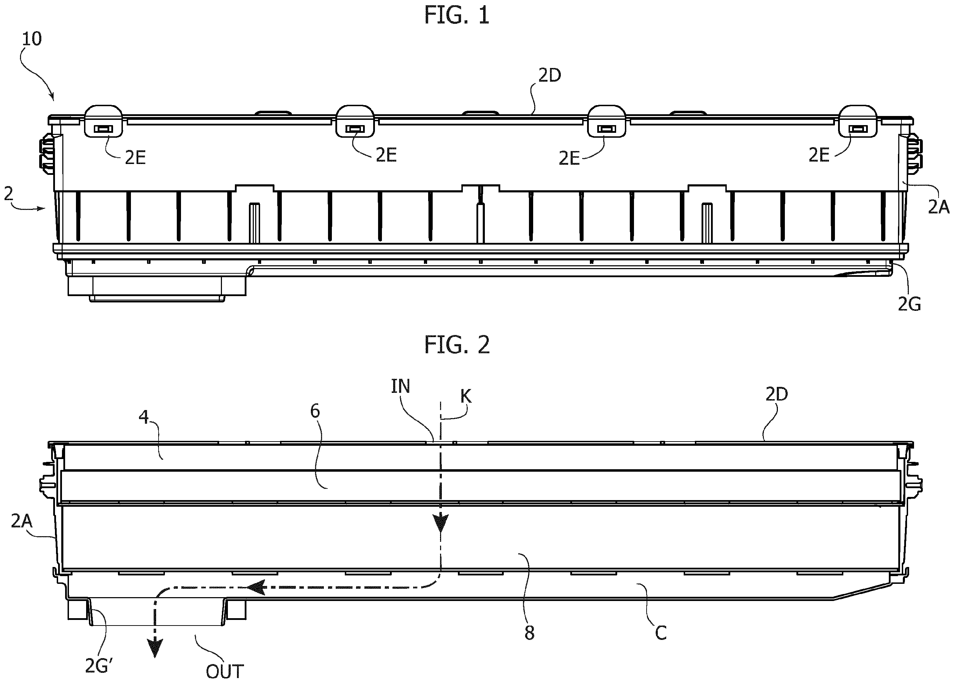

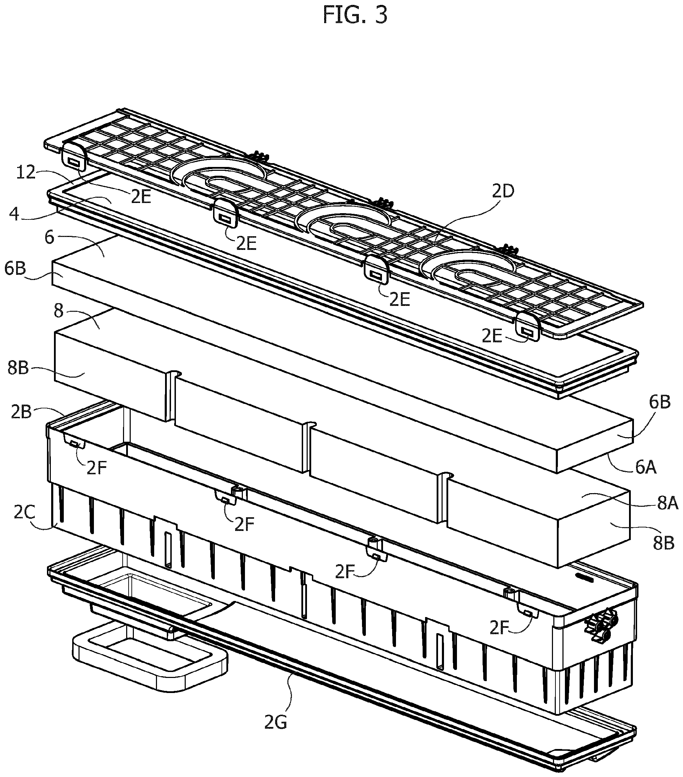

With reference to Figures 1 to 3, the filtering device described herein - designated as a whole by the reference number 10 - comprises an outer housing 2 defining an inner chamber C and a fluid passage K through the inner chamber C from an inlet IN to an outlet OUT.

In one or more preferred embodiments, like the one illustrated, the outer housing 2 comprises a tubular body 2A having a first end 2B and an opposite second end 2C. The outer housing 2 further comprises a closing grill 2D, which is coupled to the first end 2B of the tubular body 2A by way of fast-connection means. In the example illustrated, the closing grill 2D comprises a plurality of bendable tabs 2E provided with through openings, which are configured for being engaged by corresponding reliefs 2F provided on the outer surface of the tubular body 2A.

The outer housing 2 further comprises a connector 2G for connection of the device 10 to an air-intake system of the agricultural machine, which is permanently fixed to the end 2C of the tubular body 2A, for example via glue or else as a result of a welding operation. The connector 2G has a generic shell-like conformation and is provided with a restricted tubular end portion 2G', via which it can be connected to the air-intake system.

The configuration of the connector 2G may vary according to the type of the intake system provided in the agricultural machine on which the filtering device is to be installed.

In view of the foregoing, the inner chamber C is delimited by the tubular body 2A, the closing grill 2D, and the connector 2G. The inlet IN is defined by the closing grill 2D, and the outlet OUT by the connector 2G.

The filtering device 10 comprises a first filter module 4 for carrying out an action of filtering on a flow of air that traverses the fluid passage K to eliminate or reduce the amount of dust present in the air flow.

Moreover, the filtering device 10 comprises a second filter module 6 for carrying out an action of filtering on a flow of air that traverses the fluid passage K to eliminate or reduce the amount of aerosol present in the air flow.

The filtering device 10 further comprises a third filter module 8 for carrying out an action of filtering on a flow of air that traverses the fluid passage to eliminate or reduce the amount of vapour present in the air flow.

The filter modules 4, 6, and 8 may be obtained according to the requirements contemplated by the European standard No. EN15695-2.

In one or more embodiments, the filter module 4 may be constituted by a pleated synthetic filtering medium (made up of one or more layers) or else by a porous three-dimensional monolith made up of one or more layers with porosity gradient.

In one or more embodiments, the filter module 6 may be constituted by pleated synthetic filtering media with high filtering efficiency (made up of one or more layers) or else by composite filtering media having layers of synthetic porous medium and by a membrane or membranes made of ePTFE or else by porous three-dimensional monoliths made up of one or more layers with porosity gradient with high filtering efficiency.

In one or more embodiments, the filter module 8 may be constituted by molecular sieves in powder or granular form or else suitably perforated (honeycomb) bricks of activated carbon and adsorbent zeolites which can be contained and withheld by filtering media made of non-woven fabric, which contain inside them powder and/or granules of molecular sieves (such as activated carbon or porous zeolites). The filter module 8 may, moreover, have one or more plates containing activated carbon.

The filter modules 4, 6, and 8 are arranged in series along the fluid passage K, within the tubular body 2A, in a sequence that starts from the module 4 and ends with the module 8, with reference to a direction from the inlet IN to the outlet OUT.

In one or more preferred embodiments, like the one illustrated, the filter modules 4, 6, and 8 present as blocks roughly in the form of a parallelepiped, and define a section of flow substantially corresponding to the cross section of the tubular body 2A.

In one or more preferred embodiments, the second and third filter modules 6, 8 are fixed together in a permanent way, for example via glue or as a result of a welding operation, preferably at respective opposed faces 6A, 8A. Between the two filter modules 6, 8 there may possibly be provided a dividing mesh to facilitate mutual fixing of the two filter modules.

The second and third filter modules 6, 8 are permanently fixed also to the tubular body 2A of the outer housing 2, preferably at one or more lateral faces 6B, 8B that are opposed to the inner surface of the tubular body 2A. Also in this case, permanent fixing may be obtained, for example, via glue or as a result of a welding operation.

On the other hand, the first filter module 4 is coupled to the tubular body 2A in a removable way.

The first filter module 4 is surrounded by an annular gasket 12 (in a plane parallel to the section of flow of the module), via which it is snap-fit mounted on the first end 2B of the tubular body 2A. The gasket 12 obtains a hermetic connection between the filter module 4 and the tubular body 2A.

In view of the foregoing, to remove the first filter module 4 from the outer housing 2 it is simply necessary to take down the closing grill 2D from the tubular body 2A and remove the first filter module from the condition of snap-fit on the first end 2B of the tubular body 2A.

As already discussed previously, the possibility of removing the filter module 4 from the outer housing 2 makes it possible to carry out on this a maintenance operation, for example cleaning of the filter module, or else replace it with a new filter module where necessary.

In this way, the service life of the filtering device can be prolonged, avoiding complete replacement of the device.

On the other hand, the permanent connection between the outer housing 2 and the two filter modules 6, 8 prevents any alteration of the configuration of these two modules within the housing 2, during the operation carried out on the first module 4, so as to guarantee maximum safety for functionality of the device.

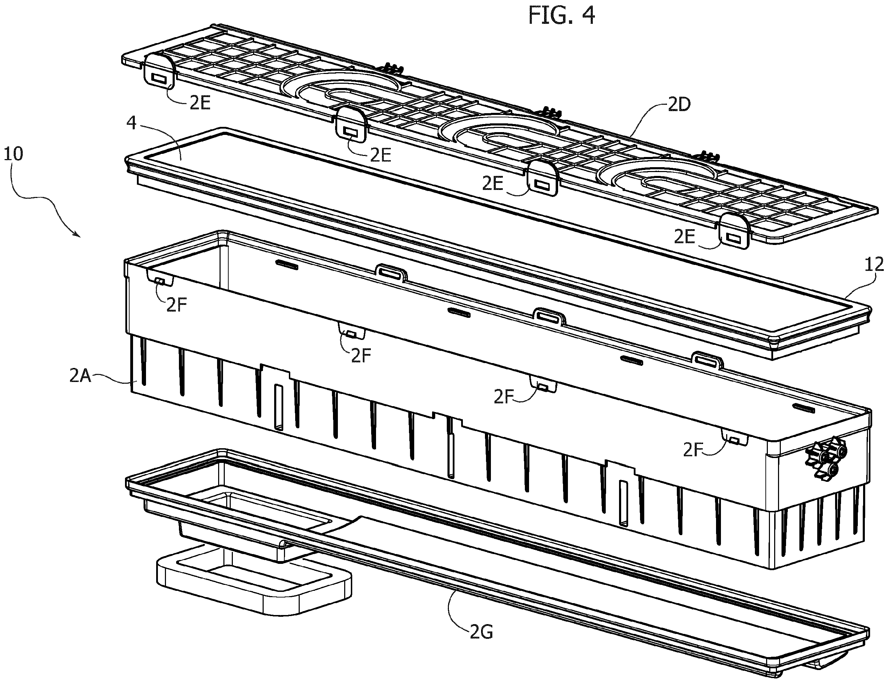

With reference to Figure 4, this illustrates a second example of the filtering device 10 not according to the invention in which only the first filter module 4 is provided. The filtering device 10 maintains the outer housing 2 described above with reference to Figures 1 - 3, and the filter module 4 is coupled thereto with the same modality as described previously.

The filtering device 10 according to this further example is evidently designed for applications different from the ones referred to above, where the agricultural machine is not configured for use for spraying pesticides.

According to a further example (not according to the invention and not illustrated), the filtering device 10 may, instead, envisage only the two filter modules 4, 6, also in this case within an outer housing 2 as described above.

In view of the foregoing, the modular configuration of the filtering device described herein makes it possible to obtain different types of devices in a simple way and with a reduced number of components, maintaining the same basic structure described previously, provided by the three components that together constitute the outer housing 2, i.e., the tubular body 2A, the closing grill 2B, and the connector 2G.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A filtering device (10) for filtering air, in particular for the cab of an agricultural machine operating with a system for spraying pesticides,
the device comprises:
- an outer housing (2), which defines an inner chamber (C) and a fluid passage (K) through the inner chamber;
- a first filter module (4) for carrying out an action of filtering on a flow of air that traverses the fluid passage (K) to eliminate or reduce the amount of dust present in the air flow;
- a second filter module (6) for carrying out an action of filtering on a flow of air that traverses the fluid passage (K) to eliminate or reduce the amount of aerosol present in the air flow; and
- a third filter module (8) for carrying out an action of filtering on a flow of air that traverses the fluid passage (K) to eliminate or reduce the amount of vapour present in the air flow;
wherein the second and third filter modules (6, 8) are arranged within the inner chamber (C) and are permanently fixed to the outer housing (2) so that they cannot be removed from the outer housing (2); and
wherein the first filter module (4) is arranged within the inner chamber (C) and is coupled to the housing (2) in a removable way, wherein the outer housing (2) comprises a tubular body (2A) having a first end (2B), coupled to which is a closing grill (2D), and a second end (2C), coupled to which is a connector (2G) for connection of the filtering device (10) to an air-intake system of the agricultural machine, the inner chamber (C) being delimited by the tubular body (2A), the closing grill (2D), and the connector (2G),
wherein the first filter module (4) is surrounded by an annular gasket (12), by means of which it is snap-fit mounted on the first end (2B) of the tubular body (2A), and
wherein the closing grill (2D) is coupled to the first end (2B) of the tubular body (2A) via fast-connection means.

2. The device according to claim 1, wherein the first filter module (4) is coupled to the first end (2B) of the tubular body (2A) via fast-connection means.

3. The device according to claim 1 or 2, wherein the closing grill (2D) is fixed to the first filter module (4) in a permanent way, preferably via glue or as a result of a welding operation.

4. The device according to any one of claims 1 to 3, wherein the connector (2G) is fixed to the tubular body (2A) in a permanent way, preferably via glue or as a result of a welding operation.

5. The device according to any one of the preceding claims, wherein the second and third filter modules (6, 8) are fixed together in a permanent way, preferably via glue or as a result of a welding operation.

6. The device according to any one of the preceding claims, wherein the second and third filter modules (6, 8) are fixed to the tubular body (2A) in a permanent way, preferably via glue or as a result of a welding operation.

## Patentansprüche

1. Filtervorrichtung (10) zum Filtern von Luft, insbesondere für die Kabine einer landwirtschaftlichen Maschine, die mit einem System zum Sprühen von Pestiziden arbeitet, wobei die Vorrichtung umfasst:
- ein Außengehäuse (2), das eine innere Kammer (C) und einen Fluiddurchlass (K) durch die innere Kammer definiert;
- ein erstes Filtermodul (4) zur Durchführung einer Filterung eines Luftstroms, der den Fluiddurchlass (K) durchquert, um die Menge des in dem Luftstrom vorhandenen Staubs zu beseitigen oder zu reduzieren;
- ein zweites Filtermodul (6) zur Durchführung einer Filterung eines Luftstroms, der den Fluiddurchlass (K) durchquert, um die Menge des in dem Luftstrom vorhandenen Aerosols zu beseitigen oder zu reduzieren; und
- ein drittes Filtermodul (8) zur Durchführung einer Filterung eines Luftstroms, der den Fluiddurchlass (K) durchquert, um die Menge des in dem Luftstrom vorhandenen Dampfes zu beseitigen oder zu reduzieren;
wobei das zweite und das dritte Filtermodul (6, 8) innerhalb der inneren Kammer (C) angeordnet und dauerhaft am Außengehäuse (2) befestigt sind, sodass sie nicht vom Außengehäuse (2) entfernt werden können; und
wobei das erste Filtermodul (4) innerhalb der inneren Kammer (C) angeordnet und auf entfernbar mit dem Gehäuse (2) gekoppelt ist, wobei das Außengehäuse (2) einen rohrförmigen Körper (2A) mit einem ersten Ende (2B), an dem ein Verschlussgitter (2D) angebracht ist, und einem zweiten Ende (2C), an dem ein Verbinder (2G) zum Anschluss der Filtervorrichtung (10) an ein Luftansaugsystem der landwirtschaftlichen Maschine angebracht ist, umfasst, wobei die innere Kammer (C) durch den rohrförmigen Körper (2A), das Verschlussgitter (2D) und den Verbinder (2G) begrenzt wird,
wobei das erste Filtermodul (4) durch eine ringförmige Dichtung (12) umgeben ist, mittels derer es am ersten Ende (2B) des rohrförmigen Körpers (2A) einrastend montiert ist, und
wobei das Verschlussgitter (2D) über Schnellverbindungsmittel mit dem ersten Ende (2B) des rohrförmigen Körpers (2A) gekoppelt ist.

2. Vorrichtung nach Anspruch 1, wobei das erste Filtermodul (4) über Schnellverbindungsmittel mit dem ersten Ende (2B) des rohrförmigen Körpers (2A) gekoppelt ist.

3. Vorrichtung nach Anspruch 1 oder 2, wobei das Verschlussgitter (2D) dauerhaft, vorzugsweise mittels Klebstoff oder als Ergebnis eines Schweißvorgangs, am ersten Filtermodul (4) befestigt ist.

4. Vorrichtung nach einem der Ansprüche 1 bis 3, wobei der Verbinder (2G) dauerhaft, vorzugsweise mittels Klebstoff oder als Ergebnis eines Schweißvorgangs, am rohrförmigen Körper (2A) befestigt ist.

5. Vorrichtung nach einem der vorhergehenden Ansprüche, wobei das zweite und das dritte Filtermodul (6, 8) dauerhaft, vorzugsweise mittels Klebstoff oder als Ergebnis eines Schweißvorgangs, aneinander befestigt sind.

6. Vorrichtung nach einem der vorhergehenden Ansprüche, wobei das zweite und das dritte Filtermodul (6, 8) dauerhaft, vorzugsweise mittels Klebstoff oder als Ergebnis eines Schweißvorgangs, am rohrförmigen Körper (2A) befestigt sind.

## Revendications

1. Dispositif de filtration (10) destiné à filtrer de l'air, en particulier pour la cabine d'une machine agricole fonctionnant avec un système destiné à pulvériser des pesticides, le dispositif comprend :
- un boîtier extérieur (2), qui définit une chambre intérieure (C) et un passage de fluide (K) à travers la chambre intérieure ;
- un premier module filtre (4) destiné à réaliser une action de filtration sur un écoulement d'air qui traverse le passage de fluide (K) pour éliminer ou réduire la quantité de poussière présente dans l'écoulement d'air ;
- un deuxième module filtre (6) destiné à réaliser une action de filtration sur un écoulement d'air qui traverse le passage de fluide (K) pour éliminer ou réduire la quantité d'aérosol présente dans l'écoulement d'air ; et
- un troisième module filtre (8) destiné à réaliser une action de filtration sur un écoulement d'air qui traverse le passage de fluide (K) pour éliminer ou réduire la quantité de vapeur présente dans l'écoulement d'air ;
dans lequel les deuxième et troisième modules filtres (6, 8) sont agencés à l'intérieur de la chambre intérieure (C) et sont fixés de façon permanente au boîtier extérieur (2) de telle sorte qu'ils ne peuvent pas être enlevés du boîtier extérieur (2) ; et
dans lequel le premier module filtre (4) est agencé à l'intérieur de la chambre intérieure (C) et est couplé au boîtier (2) de manière amovible, dans lequel le boîtier extérieur (2) comprend un corps tubulaire (2A) ayant une première extrémité (2B), à laquelle est couplée une grille de fermeture (2D), et une seconde extrémité (2C), à laquelle est couplé un raccord (2G) pour le raccordement du dispositif de filtration (10) à un système d'admission d'air de la machine agricole, la chambre intérieure (C) étant délimitée par le corps tubulaire (2A), la grille de fermeture (2D), et le raccord (2G),
dans lequel le premier module filtre (4) est entouré par un joint d'étanchéité annulaire (12), au moyen duquel il est monté par ajustement à encliquetage sur la première extrémité (2B) du corps tubulaire (2A), et
dans lequel la grille de fermeture (2D) est couplée à la première extrémité (2B) du corps tubulaire (2A) par l'intermédiaire de moyens à raccordement rapide.

2. Dispositif selon la revendication 1, dans lequel le premier module filtre (4) est couplé à la première extrémité (2B) du corps tubulaire (2A) par l'intermédiaire de moyens à raccordement rapide.

3. Dispositif selon la revendication 1 ou 2, dans lequel la grille de fermeture (2D) est fixée au premier module filtre (4) de manière permanente, de préférence par l'intermédiaire de colle ou en conséquence d'une opération de soudage.

4. Dispositif selon l'une quelconque des revendications 1 à 3, dans lequel le raccord (2G) est fixé au corps tubulaire (2A) de manière permanente, de préférence par l'intermédiaire de colle ou en conséquence d'une opération de soudage.

5. Dispositif selon l'une quelconque des revendications précédente, dans lequel les deuxième et troisième modules filtres (6, 8) sont fixés ensemble de manière permanente, de préférence par l'intermédiaire de colle ou en conséquence d'une opération de soudage.

6. Dispositif selon l'une quelconque des revendications précédente, dans lequel les deuxième et troisième modules filtres (6, 8) sont fixés au corps tubulaire (2A) de manière permanente, de préférence par l'intermédiaire de colle ou en conséquence d'une opération de soudage.
